(19) Europäisches Patentamt
European Patent Office
Office européen des brevets

(11) **EP 2 698 989 A2**

(12) **EUROPEAN PATENT APPLICATION**

(43) Date of publication:
**19.02.2014 Bulletin 2014/08**

(51) Int Cl.:
***H04N 5/378*** *(2011.01)*

(21) Application number: **13167978.9**

(22) Date of filing: **16.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.08.2012 US 201213584885**

(71) Applicants:
• **Luxen Technologies, Inc.**
**Seoul 121-835 (KR)**

• **Soh, Myung-Jin**
**Langley, British Columbia V2Y 0B2 (CA)**

(72) Inventors:
• **Soh, Myung-Jin**
**Langley, British Columbia V2Y0B2 (CA)**
• **Soh, Seul-Yi**
**Langley, British Columbia V2Y0B2 (CA)**

(74) Representative: **Patentanwälte Freischem**
**Salierring 47-53**
**50677 Köln (DE)**

(54) **Readout integrated circuit for dynamic imaging**

(57)     A sampling circuit for dynamic imaging is provided. Specifically, embodiments of the present invention relate to a readout integrated circuit (ROIC) for dynamic imaging and a related image sensor. In one embodiment of the present invention, a sampling circuit is provided that comprises: an amplifier circuit, which amplifies charge signals generated at photo diodes and converts them to voltage signals; a filter circuit (optional) that receives and filters the voltage signals to yield a filtered signal; a sampling circuit, which samples the voltage signals and outputs a sampled signal in accordance with a sampling control signal; and a digital converter, which converts the sampled signal into a digital format and outputs a digital signal.

FIG. 1

EP 2 698 989 A2

**Description**

FIELD OF THE INVENTION

In general, embodiments of the present invention relate to a sampling circuit. Specifically, embodiments of the present invention relate to a readout integrated circuit (ROIC) for dynamic imaging and a related image sensor.

BACKGROUND OF THE INVENTION

Conventional image sensors adopt a two-dimensional arrayed structure of multiple pixels with photo diodes (photo sensor) attached on top of the pixel array. An amplifier from each pixel may receive charge signals generated at the photo diodes, and convert the received charge signals into voltage signals. A correlated double sampling (CDS) circuit may extract image signals by comparing the voltage signals to a reset voltage. Extracted image signals may then be read out row-by-row.

The output of a sampling circuit is typically in analog form, which has to be converted into digital form by using an external analog-to-digital converter (ADC) in order to handle the data efficiently. Yet, to convert analog image signals generated from several thousand pixels, even the fastest ADC with processing time of only a few microseconds ($\mu$s) can only provide data transfer rate of 1~4 frames per second, which is far too slow for dynamic imaging applications.

Heretofore, attempts have been made in providing image-based integrated circuits.

U.S. Patent Number 5,554,944 discloses a sampling circuit including a first main terminal and a series coupling of a hold capacitor and a sampling switch between the first main terminal and a second main terminal, where a parallel circuit of a coil and a resistor is coupled in series with the sampling switch and the hold capacitor, and whereby the combination of the coil, the resistor and the hold capacitor generate an excitation within a time period in which the sampling switch is conductive.

U.S. Patent Number 6,384,641 discloses a signal sampling circuit and method that uses a compensating capacitor connected between a ground terminal and an output of an operational amplifier to permit noise error to be applied to both electrodes of a separate output sampling capacitor.

U.S. Patent Number 7,924,062 discloses a sampling circuit that includes an amplifier, a sampling capacitor, a feedback capacitor, and a voltage source. The sampling capacitor and the feedback capacitor are coupled to the same input terminal of the amplifier, such that the offset of the amplifier and low-frequency noise can be cancelled.

U.S. Patent Number 8,035,539 discloses a sampling circuit that includes multiple sampling channels adapted to sample the signal in time-multiplexed fashion. Each sampling channel includes a respective track-and-hold circuit connected to a respective analogue to digital converter via a respective output switch.

U.S. Patent Number 8,143,933 discloses a sampling circuit for sequential sampling of a broadband periodic input signal having a field effect transistor as a nonlinear component to which a pulsed-shaped sampling signal is supplied, by which sampling is activated so that an output signal is produced.

U.S. Patent Number 8,179,165 discloses a sampling circuit that includes a number of state elements or flip-flops. The state elements or flip-flops are each clocked by a signal that causes them to sample their inputs at a predetermined time. In sampling a plurality of digital inputs, a captured delay chain value is stored by the sampling circuit.

Unfortunately, none of these attempts address the issues of the related art.

SUMMARY OF THE INVENTION

In general, embodiments of the present invention relate to a sampling circuit. Specifically, embodiments of the present invention relate to a readout integrated circuit (ROIC) for dynamic imaging and a related image sensor. In one embodiment of the present invention, a sampling circuit is provided that comprises: an amplifier circuit, which amplifies charge signals generated at photo diodes and converts them to voltage signals; a filter circuit (optional) that receives and filters the voltage signals to yield a filtered signal; a sampling circuit, which samples the voltage signals and outputs a sampled signal in accordance with a sampling control signal; and a digital converter, which converts the sampled signal into a digital format and outputs a digital signal.

A first aspect of the present invention provides a readout integrated circuit (ROIC) for dynamic imaging, comprising: an amplifier circuit being configured to receive and amplify an input charge signal received from a set of photo diodes to yield a voltage signal; a sampling circuit coupled to the amplifier circuit, the sampling circuit being configured to receive and sample the voltage signal to yield a sampled signal; and a converter coupled to the sampling circuit, the converter being configured to receive and convert the sampled signal to yield a digital signal.

A second aspect of the present invention provides a readout integrated circuit (ROIC) for dynamic imaging, comprising: an amplifier circuit having an amplifier coupled to a feedback capacitor and an amplifier switch, the amplifier being configured to receive and amplify an input charge signal received from a set of photo diodes to yield a voltage signal; a low-pass filter circuit coupled to the amplifier circuit, the low-pass filter having a resistor coupled to a filter capacitor, and the low-pass filter circuit being configured to receive and filter the voltage signal to yield a filtered signal; a sampling circuit coupled to the low-pass filter circuit, the sampling circuit having a sampler amplifier coupled to a set of sampler capacitors and a set of sampler switches, and the sampling circuit being configured to receive and sample the filtered voltage signal to yield a sampled signal; and an analog-to-digital (ADC) converter having a ramp comparator coupled to a register, the ADC converter being configured to receive and convert the sampled signal to yield a digital signal.

A third aspect of the present invention provides a method for processing a signal with a readout integrated circuit (ROIC), comprising: amplifying an input charge signal received from a set of photo diodes to yield a voltage signal with an amplifier circuit; filtering the voltage signal to yield a filtered signal with a low-pass filter circuit coupled to the amplifier circuit; sampling the filter signal to yield a sampled signal with a sampling circuit coupled to the low-pass filter circuit; and converting the sampled signal with a converter coupled to the sampling circuit to yield a digital signal.

BRIEF DESCRIPTION OF THE DRAWINGS

These and other features of this invention will be more readily understood from the following detailed description of the various aspects of the invention taken in conjunction with the accompanying drawings in which:

Fig. 1 shows a diagram of a readout integrated circuit (IC) of an image sensor according an embodiment of the present invention.
Fig. 2 shows a schematic diagram of a pixel within the readout IC according to an embodiment of the present invention.
Fig. 3 shows a schematic diagram of Digital converter within the readout IC according to an embodiment of the present invention.
Fig. 4 shows a schematic diagram of the ramp amplifier according to an embodiment of the present invention.

The drawings are not necessarily to scale. The drawings are merely schematic representations, not intended to portray specific parameters of the invention. The drawings are intended to depict only typical embodiments of the invention, and therefore should not be considered as limiting the scope of the invention. In the drawings, like numbering represents like elements.

DETAILED DESCRIPTION OF THE INVENTION

Illustrative embodiments will now be described more fully herein with reference to the accompanying drawings, in which exemplary embodiments are shown. This disclosure may, however, be embodied in many different forms and should not be construed as limited to the exemplary embodiments set forth herein. Rather, these exemplary embodiments are provided so that this disclosure will be thorough and complete and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc., do not denote a limitation of quantity, but rather denote the presence of at least one of the referenced items. The word "set" is intended to mean a quantity of at least one. It will be further understood that the terms "comprises" and/or "comprising", or "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

Embodiments of the present invention relate to a sampling circuit. Specifically, embodiments of the present invention relate to readout integrated circuit (ROIC) for dynamic imaging and a related image sensor. In one embodiment of the present invention, a sampling circuit is provided that comprises: an amplifier circuit, which amplifies charge signals generated at photo diodes and converts them to voltage signals; a filter circuit (optional) that receives and filters the voltage signals to yield a filtered signal; a sampling circuit, which samples the voltage signals and outputs a sampled signal in accordance with a sampling control signal; and a digital converter, which converts the sampled signal into a digital format and outputs a digital signal.

During a first readout period, an amplifier circuit outputs voltage signals, and a sampling circuit outputs sampled signals. During a second readout period, a digital converter (e.g., ADC) converts the sampled signals obtained during the first readout period into a digital format. A second readout period may then follow the first readout period. In general, the converter may count until the sampling signals become similar and/or identical to a preset ramp signal in magnitude, and then may outputs a counted result as a digital signal. As will be shown below, the digital converter may be comprised of: a lamp comparator, which compares the sampled signal to the ramp signal and outputs an enabling comparator output signal at a point where those two signals become identical in magnitude; and/or a register, which receives the counted data when a set signal is applied, and stores data in digital form when the enabling comparator output signal kicks in. The stored data may then be read out during the third readout period followed by a second readout period. In one embodiment of the present invention, there may be a low-pass filter in between Amplifier and Sampling circuit for noise filtering.

Along these lines, embodiments of the present invention will utilize components such as ROICs, amplifiers, filters (e.g., low-pass), sampling circuits/samplers, analog-to-digital converters (ADCs), etc. The following section will describe and/or define such components.

A readout integrated circuit (ROIC) is an electrical circuit multiplexer that mechanically and electrically interfaces or couples to a focal plane array (FPA) sensor/detector serving as a voltage buffer which measures or reads individual FPA outputs (sensor data or information) that are driven by incident electromagnetic energy on each and every individual input FPA unit cell or detector and transforms or transmits the sensor data to external electronics. The main function of an infrared readout circuit is to transform a very small diode incremental current, generated by infrared radiation, into a relatively large measurable output voltage. This is commonly done by integrating the photocurrent in a small capacitor during a fixed period of time. The capacitor's voltage at the end of the integration period should be proportional to the current and, as such, to the incident infrared radiation of a pixel corresponding to the location of the infrared diode photo sensor. Infrared imagers consist of linear or two dimensional arrays including a very large number of infrared photo sensors.

These arrays are denoted linear or focal plane arrays. Given that in the most general case each pixel of an image requires an individual readout circuit, the electronics associated to an infrared imager consists of a very large number (thousands) of readout circuits. Readout electronics are implemented as very large scale application specific integrated circuits or application specific integrated circuits (ASIC) in complementary metal-oxide semiconductor (CMOS) technology. Due to the fact that infrared imagers can have several thousand unit cells, the unit cell is required to be very compact, to have very low power dissipation and at the same time to have high performance characteristics.

A typical FPA may be composed of 512 columns by 512 rows of individual (assuming no crosstalk) unit cells or pixels having a physical size of 30 $\mu$m by 30 $\mu$m which define the image frame of the electromagnetic energy incident on the surface. The function of the ROIC is to scan the 512 by 512 array, not unlike a raster scan, in such a way as to synchronously read and bring together in a formatted way all the pixel outputs from the FPA into an appropriate lower impedance electrical circuit for video transmission and processing. Each unit cell detector output responds (gain) limited range of wavelengths of the electromagnetic energy incident upon the input, thereby defining the image as infrared, visible, x-ray, etc. The ROIC inputs are composed of a source follower field effect transistor (FET) topology (voltage buffer) such as to transform large unit cell output impedance to low input impedance to drive a transmission via (e.g., several hundreds of pF) of the unit cell output response. Each unit cell is given a fixed amount of time (integration time) to sample the incident electromagnetic energy before the readout, not unlike a sample and hold circuit.

The interface of the readout to the array is composed of hybridized indium dots for each and every unit cell-to-source follower interface. For example, GaN detector arrays are hybridized to a Si ROIC using flip chip bonding technology. Scanning the array can be done in various ways. Several methods exist, including: snapshot, fowler, and sampling up the ramp. Integration and readout modes include integrate-while-read and integrate-then-read.

The opposite use of a ROIC is the read-in integrated circuit (RIIC), which is used to produce or simulate images in a focal plane array. The analogous image system using a RIIC for image simulation is the television image process. Image simulation is used for hardware-in-the-loop (HIL) testing purposes. Sampling can be done for functions varying in space, time, or any other dimension, and similar results are obtained in two or more dimensions.

For functions that vary with time, let $s(t)$ be a continuous function (or "signal") to be sampled, and let sampling be performed by measuring the value of the continuous function every $T$ seconds, which is called the sampling interval. Thus, the sampled function is given by the sequence:

$s(nT)$, for integer values of $n$.

The sampling frequency or sampling rate $f_s$ is defined as the number of samples obtained in one second (samples per second), thus:

$$f_s = 1/T$$

Reconstructing a continuous function from samples is done by interpolation algorithms. The Whittaker-Shannon interpolation formula is mathematically equivalent to an ideal low-pass filter whose input is a sequence of Dirac delta functions that are modulated (multiplied) by the sample values. When the time interval between adjacent samples is a constant (*T*), the sequence of delta functions is called a Dirac comb. Mathematically, the modulated Dirac comb is equivalent to the product of the comb function with *s*(*t*). That purely mathematical function is often loosely referred to as the sampled signal. Most sampled signals are not simply stored and reconstructed. But the fidelity of a theoretical reconstruction is a customary measure of the effectiveness of sampling. That fidelity is reduced when *s*(*t*) contains frequency components higher than $f_s/2$ Hz, which is known as the Nyquist frequency of the sampler. Therefore *s*(*t*) is usually the output of a low-pass filter, functionally known as an "anti-aliasing" filter. Without an anti-aliasing filter, frequencies higher than the Nyquist frequency will influence the samples in a way that is misinterpreted by the interpolation process.

As will be further described, a low-pass filter is an electronic filter that passes low-frequency signals but attenuates (e.g., reduces the amplitude of) signals with frequencies higher than the cutoff frequency. The actual amount of attenuation for each frequency varies from filter to filter. It is sometimes called a high-cut filter, or treble cut filter when used in audio applications. A low-pass filter is the opposite of a high-pass filter. A band-pass filter is a combination of a low-pass and a high-pass.

Low-pass filters exist in many different forms, including electronic circuits (such as a hiss filter used in audio), anti-aliasing filters for conditioning signals prior to analog-to-digital conversion, digital filters for smoothing sets of data, acoustic barriers, blurring of images, and so on. The moving average operation used in fields such as finance is a particular kind of low-pass filter, and can be analyzed with the same signal processing techniques as are used for other low-pass filters. Low-pass filters provide a smoother form of a signal, removing the short-term fluctuations, and leaving the longer-term trend.

An optical filter could correctly be called low-pass, but conventionally is described as "long pass" (low frequency is long wavelength), to avoid confusion. An ideal low-pass filter completely eliminates all frequencies above the cutoff frequency while passing those below unchanged: its frequency response is a rectangular function and is a brick-wall filter. The transition region present in practical filters does not exist in an ideal filter. An ideal low-pass filter can be realized mathematically (theoretically) by multiplying a signal by the rectangular function in the frequency domain or, equivalently, convolution with its impulse response, a sinc function, in the time domain.

However, the ideal filter is impossible to realize without also having signals of infinite extent in time, and so generally needs to be approximated for real ongoing signals, because the sinc function's support region extends to all past and future times. An ideal filter would therefore need to have infinite delay, or knowledge of the infinite future and past, in order to perform the convolution. It is effectively realizable for pre-recorded digital signals by assuming extensions of zero into the past and future, or more typically by making the signal repetitive and using Fourier analysis.

Real filters for real-time applications approximate the ideal filter by truncating and windowing the infinite impulse response to make a finite impulse response. Applying that filter requires delaying the signal for a moderate period of time, allowing the computation to "see" a little bit into the future. This delay is manifested as phase shift. Greater accuracy in approximation requires a longer delay.

An ideal low-pass filter results in ringing artifacts via the Gibbs phenomenon. These can be reduced or worsened by choice of windowing function, and the design and choice of real filters involves understanding and minimizing these artifacts. For example, "simple truncation [of sinc] causes severe ringing artifacts," in signal reconstruction, and to reduce these artifacts one uses window functions "which drop off more smoothly at the edges."
The Whittaker-Shannon interpolation formula describes how to use a perfect low-pass filter to reconstruct a continuous signal from a sampled digital signal. Real digital-to-analog converters use real filter approximations.

One simple electrical circuit that will serve as a low-pass filter consists of a resistor in series with a load, and a capacitor in parallel with the load. The capacitor exhibits reactance and blocks low-frequency signals, causing them to go through the load instead. At higher frequencies, the reactance drops, and the capacitor effectively functions as a short circuit. The combination of resistance and capacitance gives you the time constant of filter:

$$\tau = RC \text{(represented by the Greek letter tau)}.$$

The break frequency, also called the turnover frequency or cutoff frequency (in hertz), is determined by the time constant:

$$f_c = \frac{1}{2\pi\tau} = \frac{1}{2\pi RC}$$

or equivalently (in radians per second):

$$\omega_c = \frac{1}{\tau} = \frac{1}{RC}.$$

One way to understand this circuit is to focus on the time the capacitor takes to charge. It takes time to charge or discharge the capacitor through that resistor. At low frequencies, there is plenty of time for the capacitor to charge up to practically the same voltage as the input voltage.

At high frequencies, the capacitor only has time to charge up a small amount before the input switches direction. The output goes up and down only a small fraction of the amount the input goes up and down. At double the frequency, there's only time for it to charge up half the amount.

Another way to understand this circuit is with the idea of reactance at a particular frequency.

Since DC (direct current) cannot flow through the capacitor, DC input must "flow out" the path marked $V_{out}$ (analogous to removing the capacitor). Moreover, since AC (alternating current) flows very well through the capacitor (e.g., almost as well as it flows through solid wire), AC input "flows out" through the capacitor, effectively short circuiting to ground (analogous to replacing the capacitor with just a wire). The capacitor is not an "on/off" object (like the block or pass fluidic explanation above). The capacitor will variably act between these two extremes. The Bode plot and frequency response show this variability.

Correlated double sampling (CDS) is a method to measure electrical values such as voltages or currents that allows removing an undesired offset. It is used often when measuring sensor outputs. The output of the sensor is measured twice: once in a known condition and once in an unknown condition. The value measured from the known condition is then subtracted from the unknown condition to generate a value with a known relation to the physical quantity being measured.

This is commonly used in switched capacitor operational amplifiers to effectively double the gain of the charge sharing operational amplifier (op-amp), while adding an extra phase. When used in imagers, correlated double sampling is a noise reduction technique in which the Reference Voltage of the pixel (i.e., the pixel's voltage after it is reset) is removed from the Signal Voltage of the pixel (i.e., the pixel's voltage at the end of integration) at the end of each integration period.

In electronics, a sample and hold (S/H, also "follow-and-hold") circuit is an analog device that samples (captures, grabs) the voltage of a continuously varying analog signal and holds (locks, freezes) its value at a constant level for a specified minimal period of time. Sample and hold circuits and related peak detectors are the elementary analog memory devices. They are typically used in analog-to-digital converters to eliminate variations in input signal that can corrupt the conversion process.

A typical sample and hold circuit stores electric charge in a capacitor and contains at least one fast FET switch and at least one operational amplifier. To sample the input signal, the switch connects the capacitor to the output of a buffer amplifier. The buffer amplifier charges or discharges the capacitor so that the voltage across the capacitor is practically equal, or proportional to, input voltage.

In hold mode, the switch disconnects the capacitor from the buffer. The capacitor is invariably discharged by its own leakage currents and useful load currents, which makes the circuit inherently volatile, but the loss of voltage (voltage drop) within a specified hold time remains within an acceptable error margin. In the context of LCD screens, it is used to describe when a screen samples the input signal, and the frame is held there without redrawing it. This does not allow the eye to refresh and leads to blurring during motion sequences, also the transition is visible between frames because the backlight is constantly illuminated, adding to blurring.

An analog-to-digital converter (e.g., ADC, A/D or A-to-D) is a device that uses sampling to convert a continuous quantity to a discrete time representation in digital form. The reverse operation is performed by a digital-to-analog converter (DAC). An ADC may also provide an isolated measurement such as an electronic device that converts an input analog voltage or current to a digital number proportional to the magnitude of the voltage or current. However, some non-electronic or only partially electronic devices, such as rotary encoders, can also be considered ADCs. The digital output may use different coding schemes. Typically the digital output will be a two's complement binary number that is proportional to the input, but there are other possibilities. An encoder, for example, might output a Gray code.

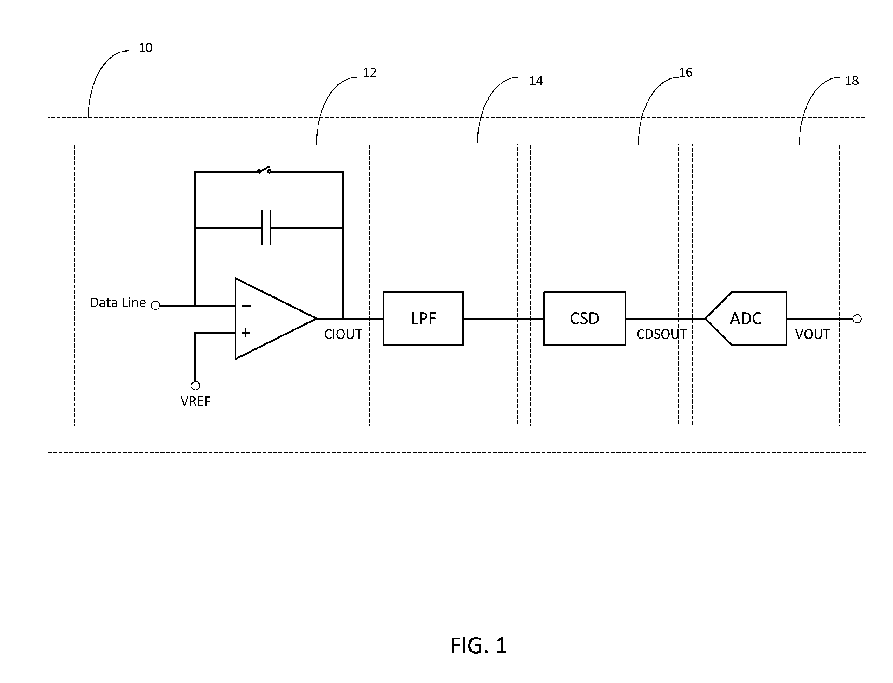

Referring to Fig. 1, an ROIC 10 according to an embodiment of the present invention is shown. As depicted, ROIC 10 may include: an amplifier circuit 12; a filter circuit 14 (optional); a sampling circuit 16, and a digital converter 18. Amplifier circuit 12 receives a charge signal generated at photo diodes via a data line, and outputs a voltage signal (CIOUT) after amplification.

Filter circuit 14 reduces and or eliminates any undesirable high frequency noise factor from the amplified output signal (CIOUT). Any heat noise from the photo diodes (and/or other noise issued by switching operations of switches within amplifier circuit 12 and/or sampling circuit 16 may be greatly reduced or eliminated entirely. Sampling circuit 16 samples the amplified voltage signal (CIOUT) at before and after it receives the voltage signal (CIOUT) to reduce low frequency noise and offset noise, and outputs a sampling signal (CDSOUT). Digital converter 18 then receives the sampling signal (CDSOUT) and converts it into a digital form and outputs digital signal (VOUT).

In the event filter circuit 14 is implemented within ROIC 10, filter circuit 14 will receive and filter the voltage signal (CIOUT) from amplifier circuit 12 and to produce/yield a filtered signal. Sampler circuit 16 will receive and sample the filtered signal to yield a sampled signal for converter 18 to then convert to a digital format. If filter circuit 14 is not implemented within ROIC 10, sampling circuit 16 will receive and sample the voltage signal directly from amplifier circuit 12 to yield an unfiltered sampled signal for converter 18 to convert to a digital format.

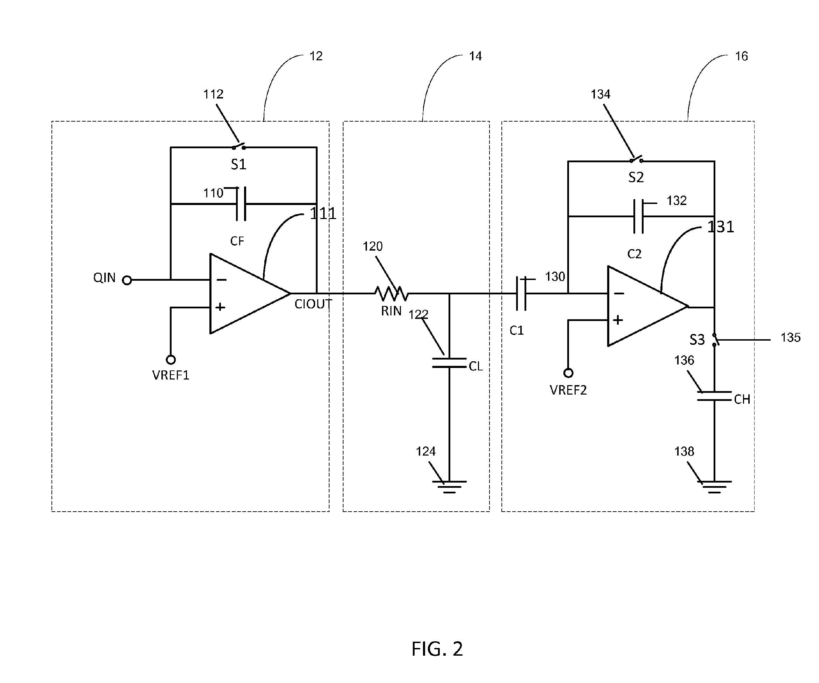

Referring to Fig. 2, as indicated above, photo diodes (not shown) receive photons and produce charge signal (QIN), and transfer the charge signal to each pixel through a data line. The data line is connected to a negative node of an operational amplifier 111 within amplifier circuit 12. A first reference voltage (VREF1) is received by the positive node of operational amplifier 111. A feedback capacitor 110 (CF) is positioned in between the negative node of operational amplifier 111 and its output node, so that the input charge signal (QIN) charges feedback capacitor 110 (CF). The charged voltage may be determined by a ratio of the input charge to capacitance: QIN/CF.

A first switch 112 (S1) is connected to either ends of the feedback capacitor 110 (CF), and feedback capacitor 110 resets as switch 112 is closed at a reset (RST) signal. This may result in an output signal that may equal to the reference voltage (VREF1). After resetting of feedback capacitor 110 (CF), operational amplifier 111 outputs a voltage signal (CIOUT) that is equal to a sum of the reference voltage (VREF1) and the charged voltage in the feedback capacitor 110 (CF). The reset (RST) signal may be applied at the beginning of every readout/output period (Ts), and feedback capacitor 100 (CF) may be charged until the end of the readout period.

Filter circuit 14 may comprise a low-pass filter having a resistor 120 (RIN) and a capacitor 122 (CL) that is grounded 124. After passing through filter circuit 14, an amplified voltage signal (CIOUT) may be received by sampling circuit 16. As shown, sampling circuit 16 may generally comprise sampler/operational amplifier 131 that is coupled to sampler capacitors 130 and 132 (C1 and C2), switches 134 and 135 (S2 and S3), and "sample and hold capacitor 136 (CH) that is grounded 138. Upon receiving the filtered voltage signal from filter circuit 14 (if filter circuit is implemented within ROIC 10), the filtered voltage signal may undergo further amplification via sampler/operational amplifier 131. Along these lines, amplification by sampler amplifier 131 may be based on an amplification ratio that may be determined based on a ratio of capacitance of sampler capacitors 130 and 132 (C1 and C2, respectively), which are coupled to a negative node of the sampler amplifier 131. Sampling circuit 16 may then output a sampling signal (CDSOUT shown in Fig. 1) based on a second reference voltage (VREF2), which is applied to a positive node of the sampler amplifier 131. To reduce offset, sampling circuit 16 may comprise a correlated double sampling circuit (CDS), which samples signals before and after the incoming charge signals and outputs the difference between those two sampled signals as final output signal.

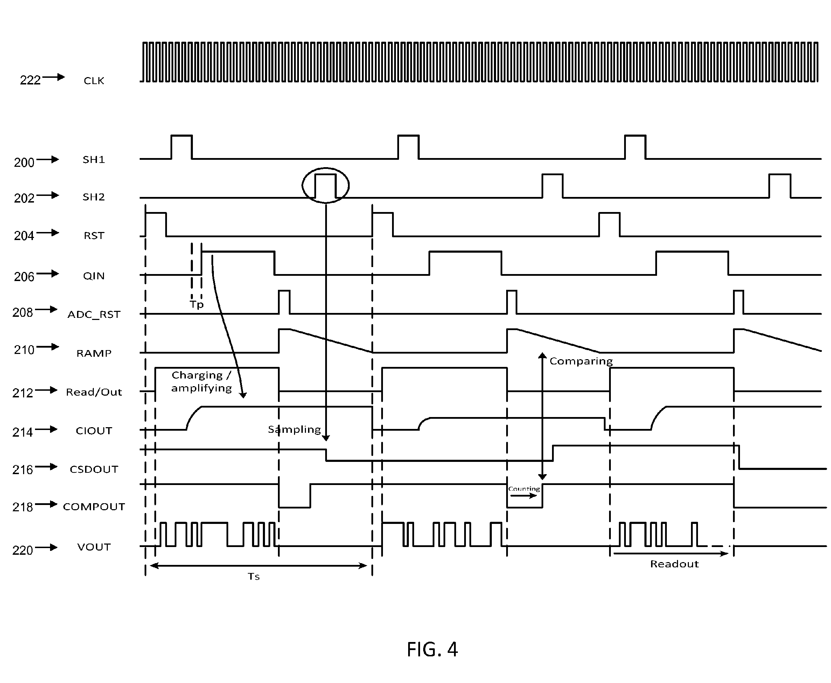

Referring to Figs. 2 and 4 collectively, a first sampling control signal 200 (SH1) may close switch 134 (S2), and capacitor 132 (C2) discharges to "reset" at the beginning of each and every readout period 212 (Ts). Conversely, switch 134 (S2) may open after a set of clock cycles 222, and capacitor 132 (C2) may then charge within voltage equivalent to an amplified voltage signal (CIOUT) 214.

A second sampling control signal 202 (SH2) may close switch 135 (S3) at the end of the readout period 212 (Ts) to charge hold capacitor 136 (CH), and output a charged voltage as the sampling signal 216 (CDSOUT). After period of time, second sampling control signal (202 SH2) may open switch 135 (S3), and hold capacitor 136 (CH) may hold the charged voltage to maintain the sampling signal 216 (CDSOUT) until second sampling control signal 202 (SH2) closes switch (S3) 135.

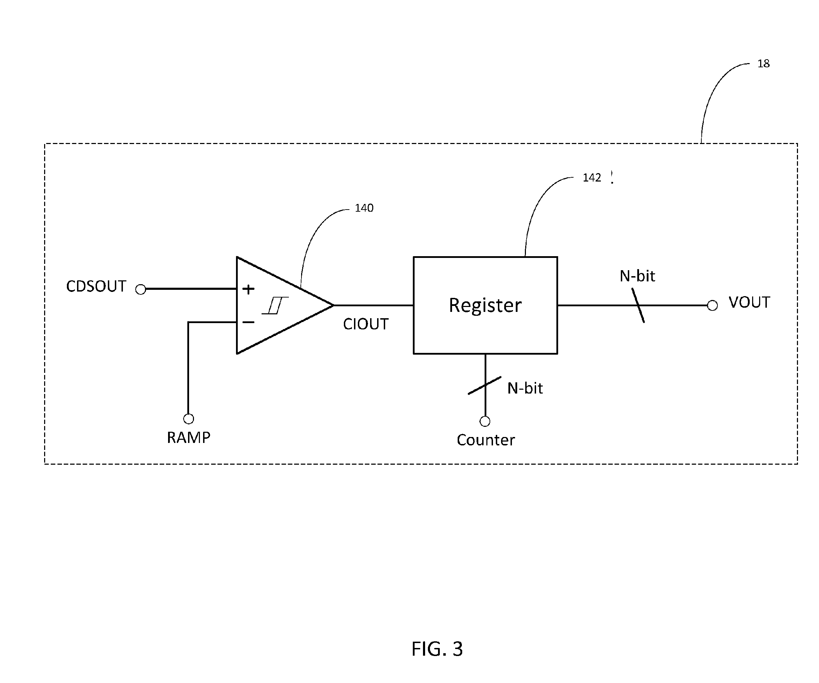

Referring to Figs. 3-4 collectively, digital converter 18 may then convert sampling signal 216 (CDSOUT) from sampling circuit 16 into an appropriate digital output signal 220 (VOUT). As shown in Fig. 3, digital converter 18 may be comprised of a ramp comparator 140 and a register 142. Ramp comparator 140 may compare sampling signal 216 (CDSOUT) to a ramp signal 210 (RAMP), which linearly decreases from an initial ramp voltage after a converter reset signal (CDS_RST) activates.

As ramp comparator 140 begins to operate, it outputs a low level comparator output (COMPOUT) 218. At shown from the "comparing" of ramp signal 210 (RAMP) and sampler output signal 216 (CSDOUT), the initial ramp signal 210 (RAMP) may be greater than sampling signal 216 (CSDOUT). Ramp signal 210 (RAMP) gradually decreases to the point where it becomes smaller than the sampling signal 216 (CDSOUT). Ramp comparator 140 may then output a high level comparator output 218 (COMPOUT). The comparator output signal 218 (COMPOUT) may act as a triggering signal for the register 142 to store data. In another implementation, a ramp comparator with linearly increasing output characteristic may be used as well.

As a converting reset signal 208 (ADC_RST) is applied, register 142 receives counter data that is synchronized to a clock signal 222 (CLK), and stores the digital signal 220 (VOUT) corresponding to the sampling signal 216 (CDSOUT) at a rising edge of the comparator signal 218 (COMPOUT).

The register 142 outputs the stored digital signal (220 VOUT) as the readout control signal 212 (read/out) is activated. As the converting control signal 208 (ACD_RST) is applied, a counter operates and counts the data based on the clock signal 222 (CLK), and outputs the counted data to the register 142. As thus shown in Fig. 4, ROIC 10 (Fig. 1) generally amplifies an initial charge signal, samples the resulting signal, compares them to the ramp signal and outputs the counted data repeatedly.

The process of obtaining the final data output 220 (VOUT) may include the following: amplifier circuit 12 output signal 214 (CIOUT) resets as a reset signal 204 (RST) is applied in the beginning of a first readout period; capacitor 132 (C2) in sampling circuit 16 resets as first sampling control signal 200 (SH1) is applied; after one clock cycle (Ts), a pixel data line transfers an input charge signal 206 (QIN) from the photo diodes to amplifier circuit 12, which produces amplified signal 214 (CIOUT); sampling signal 216 (CDSOUT) changes and maintains itself until the next readout period begins as second sampling control signal 202 (SH2) is applied to hold capacitor 136 (CH) in sampling circuit 16 at the end of the first readout period; digital converter 18 resets as converting reset signal 208 (ADC_RST) is applied in a second readout period, and ramp comparator 140 receives ramp signal 210 (RAMP), which is a linearly decreasing signal; ramp signal 210 (RAMP) is compared to sampling signal 216 (CDSOUT) from the previous readout period, and ramp comparator 140's output changes from a low level voltage output to a high voltage level as ramp signal 210 (RAMP) becomes smaller than sampling signal 216 (CDSOUT); converter reset signal 208 (ADC_RST) resets the counter, which enables the counter operation, and the resulting data feed into register 142; register 142 stores the data at the rising edge of ramp comparator 140's output signal 218 (COMPOUT); and as readout control signal 212 (read/out) remains active during a third readout period, register 142 outputs the counted data in digital signal 220 (VOUT).

Thus, the ROIC operates in multiple separate stages: a first stage where an initial charge signal amplification and generation of the sampling signal take place; a second stage where a comparison of the sampling signal and the ramp signal, as well as counting and storing of the data takes place; and a third stage where a read out of the stored data as digital output signal 220 (VOUT) occurs while readout control signal 212 (read/out) is active.

The stages of the multi stage process may occur consecutively. The first stage may take place during entire readout period (Ts), and "pipe-line" operation may occur throughout the stages. The second stage may take place during a late readout period, which is after a settling of the amplified signal (CIOUT), and where comparison of various signals occurs. The third stage may take place during an early readout period, where the actual "reading out" is happening. For example, in a certain readout period, amplifier circuit 12, filter circuit 14, and sampling circuit 16 may operate in the first stage, handling the initial charge signal.

Holding of sampling signal 216 (CDSOUT) in sampling circuit 16 may not occur until the late readout period, and thus sampling circuit 16 may have sampling signal (216 CDSOUT) from a previous readout period. Also, in the readout period, register 142 may outputs data 220 (VOUT) from a previous readout period. Thus the digital output signal 220 (VOUT) may comprise data obtained before the present readout period. Ramp comparator 140 in digital converter 18 may compare sampling signal 216 (CDSOUT) from the previous readout period to the ramp signal 210 (RAMP). As shown in Fig. 4, the present invention adopts a multi (e.g., three) staged pipe line operation mechanism to increased speed and efficiency, but a fewer-staged pipe line operation with longer readout periods may be used in other embodiments.

The foregoing description of various aspects of the invention has been presented for purposes of illustration and description. It is not intended to be exhaustive or to limit the invention to the precise form disclosed and, obviously, many modifications and variations are possible. Such modifications and variations that may be apparent to a person skilled in the art are intended to be included within the scope of the invention as defined by the accompanying claims.

## Claims

1. A readout integrated circuit (ROIC) for dynamic imaging, comprising:

   an amplifier circuit being configured to receive and amplify an input charge signal received from a set of photo diodes to yield a voltage signal;
   a sampling circuit coupled to the amplifier circuit, the sampling circuit being configured to receive and sample the voltage signal to yield a sampled signal; and
   a converter coupled to the sampling circuit, the converter being configured to receive and convert the sampled signal to yield a digital signal.

2. The readout integrated circuit of claim 1, further comprising one or more of the following features:

   a low-pass filter circuit coupled between the amplifier circuit and the sampling circuit, the low-pass filter circuit being configured to receive and filter the voltage signal to yield a filtered signal, and the sampling circuit being configured to receive and process the filtered signal to yield the sampled signal;
   the amplifier circuit comprising an amplifier coupled to a feedback capacitor and an amplifier switch, and the voltage signal being based on a ratio of the input charge signal to a capacitance of the feedback capacitor;
the low-pass filter comprising a resistor coupled to a filter capacitor; or
the converter being an analog-to-digital (ADC) converter that comprises a ramp comparator coupled to a register.

3. The readout integrated circuit of claim 1, the sampling circuit being further configured to amplify the filtered signal, and to hold the filtered signal after being amplified.

4. The readout integrated circuit of claim 3, the sampling circuit comprising a sampler amplifier coupled to a set of sampler capacitors and a set of sampler switches.

5. The readout integrated circuit of claim 4, an amplification ratio of the sampling circuit being based on a capacitance ratio of a first sampler capacitor of the set of sampler capacitors to a second sampler capacitor of the set of sampler capacitors; and/or
the set of sampling switches being controlled by a set of sampling control signals.

6. A readout integrated circuit (ROIC) for dynamic imaging, comprising:

an amplifier circuit having an amplifier coupled to a feedback capacitor and an amplifier switch, the amplifier being configured to receive and amplify an input charge signal received from a set of photo diodes to yield a voltage signal;
a low-pass filter circuit coupled to the amplifier circuit, the low-pass filter having a resistor coupled to a filter capacitor, and the low-pass filter circuit being configured to receive and filter the voltage signal to yield a filtered signal;
a sampling circuit coupled to the low-pass filter circuit, the sampling circuit having a sampler amplifier coupled to a set of sampler capacitors and a set of sampler switches, and the sampling circuit being configured to receive and sample the filtered voltage signal to yield a sampled signal; and
an analog-to-digital (ADC) converter having a ramp comparator coupled to a register, the ADC converter being configured to receive and convert the sampled signal to yield a digital signal.

7. The readout integrated circuit of claim 6, further comprising one or more of the following features:

the sampling circuit is further configured to amplify the filtered signal, and to hold the filtered signal after being amplified;
an amplification ratio of the sampling circuit is based on a capacitance ratio of a first sampler capacitor of the set of sampler capacitors to a second sampler capacitor of the set of sampler capacitors; or
the set of sampler switches is controlled by a set of sampling control signals.

8. A method for processing a signal with a readout integrated circuit (ROIC), comprising:

amplifying an input charge signal received from a set of photo diodes to yield a voltage signal with an amplifier circuit;
filtering the voltage signal to yield a filtered signal with a low-pass filter circuit coupled to the amplifier circuit;
sampling the filter signal to yield a sampled signal with a sampling circuit coupled to the low-pass filter circuit; and
converting the sampled signal with a converter coupled to the sampling circuit to yield a digital signal.

9. The method of claim 8, the amplifying comprising amplifying the voltage signal with an amplifier of the amplifier circuit, the amplifier being coupled to a feedback capacitor and an amplifier switch.

10. The method of claim 9, further comprising generating the voltage signal with the amplifier circuit based on a ratio of the input charge signal to a capacitance of the feedback capacitor.

11. The method of claim 8, the filtering comprising filtering the voltage signal to yield the filtered signal with a resistor coupled to a filter capacitor in the filter circuit.

12. The method of claim 8, further comprising:

amplifying the filtered signal with the sampling circuit; and
holding the filtered signal after being amplified.

13. The method of claim 11, the sampling circuit comprising a sampler amplifier coupled to a set of sampler capacitors and a set of sampler switches.

14. The method of claim 12, the amplifying of the filter signal being based on an amplification ratio of the sampling circuit,

15. The method of claim 13, the amplification ratio being based on a capacitance ratio of a first sampler capacitor of the set of sampler capacitors to a second sampler capacitor of the set of sampler capacitors.

FIG. 1

FIG. 2

FIG. 3

CLK  222

SH1  200
SH2  202
RST  204
QIN  206
ADC_RST  208
RAMP  210
Read/Out  212
CIOUT  214
CSDOUT  216
COMPOUT  218
VOUT  220

Tp

Charging / amplifying

Sampling

Ts

Comparing

Counting

Readout

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5554944 A
- US 6384641 B
- US 7924062 B
- US 8035539 B
- US 8143933 B
- US 8179165 B